(19) Europäisches Patentamt
European Patent Office
Office européen des brevets

(11) **EP 3 367 056 B1**

(12) **EUROPEAN PATENT SPECIFICATION**

(45) Date of publication and mention
of the grant of the patent:
**08.04.2020 Bulletin 2020/15**

(21) Application number: **18158274.3**

(22) Date of filing: **23.02.2018**

(51) Int Cl.:
*G01B 21/24* (2006.01)        *B23Q 17/22* (2006.01)
*G01B 5/008* (2006.01)        *G01B 21/04* (2006.01)
*G01B 5/10* (2006.01)        *G01B 5/213* (2006.01)

(54) **ERROR IDENTIFICATION METHOD FOR MACHINE TOOL**

FEHLERIDENTIFIZIERUNGSVERFAHREN FÜR WERKZEUGMASCHINE

PROCÉDÉ D'IDENTIFICATION D'ERREUR POUR MACHINE-OUTIL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.02.2017 JP 2017034560**

(43) Date of publication of application:
**29.08.2018 Bulletin 2018/35**

(73) Proprietor: **Nakamura-Tome Precision Industry
Co., Ltd
Hakusan, Ishikawa 920-2195 (JP)**

(72) Inventor: **NAKAMURA, Yoshikatsu
Hakusan, Ishikawa 920-2195 (JP)**

(74) Representative: **Wunderlich & Heim
Patentanwälte
Partnerschaftsgesellschaft mbB
Irmgardstrasse 3
81479 München (DE)**

(56) References cited:
**DE-A1-102007 015 947        JP-A- 2016 155 185
US-A1- 2001 045 021        US-A1- 2013 139 660
US-A1- 2013 253 871        US-A1- 2015 377 617**

**Description**

The present invention relates to a method for identifying and correcting geometric errors for numerical control machine tools, such as a turning center, according to claim 1.

It is well-known that 13 types of geometric errors can occur with a five-axis controlled machine tool including three translational axes and two rotation axes as described in JP2016-155185 A1, for example.

It is also well-known to identify geometric errors by measuring a center position of a reference sphere with a touch probe while indexing rotation axes.

JP2016-155185 A1 discusses an error identification method that simultaneously identifies four center position errors of rotation axes, four tilt errors of rotation axes, and two squareness errors between translational axes among the 13 types of geometric errors.

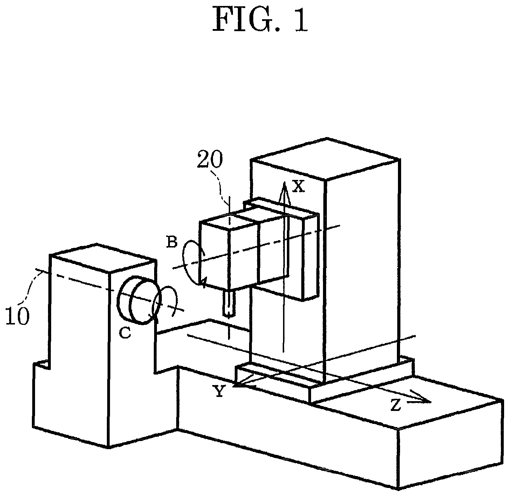

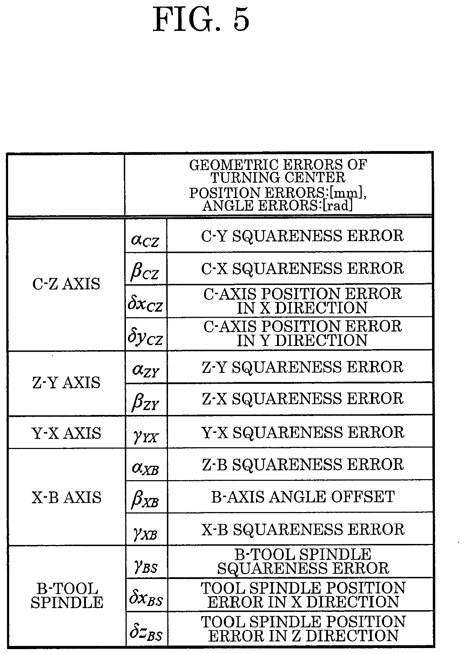

The identification method described in JP2016-155185 A1, however, has a problem of insufficient identification of some geometric errors including $\alpha_{ZY}$, $\beta_{XB}$, and $\gamma_{BS}$ among the 13 types of errors listed in FIG. 5 in the turning center model illustrated in FIG. 1.

Document US 2013/0253871 A1 discloses a five-axis controlled machine tool. With this machine tool a method for error identification according to the related art can be carried out.

A method for machine tool calibration, in which a measurement probe is used, is described in US 2013/0139660 A1.

Documents US 2015/0377617 A1, DE 10 2007 015 947 A1 and US 2001/0045021 A1 each relate to a method and an apparatus for measuring a part being mounted on a coordinate positioning machine.

An object of the present invention is to provide a method for accurately identifying and thereby correcting geometric errors in a five-axis controlled machine tool.

The object is solved by the method with the features of claim 1. Preferred embodiments are captioned in the dependent claims.

According to one aspect of the invention, there is provided an error identification method according to claim 1.

In the five-axis controlled machine tool, a tool can make translational motion along the X, Y, and Z axes orthogonal (intersecting in a broader sense) to each other. The B axis is a rotary feed axis for rotation about an axis in parallel with the Y axis, and the C axis is a rotary feed axis for rotation about an axis in parallel with the Z axis. In the five-axis controlled machine tool, a tool can make rotational motion, with one rotational degree of freedom, about the B axis, and a workpiece can make a rotational motion, with one rotational degree of freedom, about the C axis.

In the present invention, the turning radius of the measurement point of the touch probe is changed in the second measurement step and the initial position of the reference sphere in the Z direction is changed in the fourth measurement step. Thus, all the 13 types of geometric errors can be identified. Furthermore, an impact of the geometric error can be individually identified for each component.

As an example which is not claimed in the appended claims, only one of the second measurement step and the fourth measurement step may be implemented, when all of the 13 types of geometric errors do not necessarily need to be identified.

According to another example which is not claimed in the appended claims, there is provided an error identification method for a five-axis controlled machine tool including three translational axes for translational control in X, Y, and Z axis directions and two rotation axes for rotation control about B and C axes, the method comprising:

a step of providing a reference sphere to the C axis and attaching a touch probe to the B axis;
a first simultaneous measurement step of measuring a center position of the reference sphere while indexing an angle of the B axis for each predetermined angle when the B axis turns within a range of 0 to -90°, and indexing an angle of the C axis for each predetermined angle when the C axis is rotated by a single rotation while the B axis turns;
a second simultaneous measurement step of measuring the center position of the reference sphere as in the first simultaneous measurement step with a turning radius of a measurement point of the touch probe changed; and
a third simultaneous measurement step of measuring the center position of the reference sphere as in the first simultaneous measurement step with a Z direction initial position of the reference sphere changed.

The touch probe may include the plurality of styluses different from each other in the turning radius of the measurement point, and thus automatic measurement can be implemented.

The measurement may be performed with the plurality of reference spheres different from each other in the Z direction position on the side of the C axis.

Advantageous Effects of Invention

In the present invention, all of the 13 types of geometric errors can be identified by changing the Z direction initial position of the reference sphere and by changing the turning radius of the measurement point of the touch probe, when the center position (coordinates) of the reference sphere is measured with the touch probe while indexing the turning angles of the two rotation axes at each predetermined interval.

Depending on the purpose of the identification, only one of changing the initial position of the reference sphere in the Z direction and changing the turning radius of the measurement point of the touch probe may be implemented.

With the change in the geometric error measured, the impact of the geometric error can be individually identified for each component. The processing accuracy can be easily improved through the correction of the error thus identified.

The error identification is automated to facilitate the maintenance of the machine tool.

BRIEF DESCRIPTION OF THE DRAWINGS

FIG. 1 is a model diagram of a five-axis control turning center.
FIG. 2 is a model diagram of a turning center having two opposed spindles.
FIG. 3 is a diagram illustrating a positional relation between a reference sphere and a touch probe.
FIG. 4 illustrates 13 types of geometric errors.
FIG. 5 is a list of the geometric errors illustrated in FIG. 4.
FIG. 6 is a table listing identification simulation results of the geometric errors.
FIG. 7A is a table listing measurement data (1), FIG. 7B is a table listing measurement data (2), and FIG. 7C is a table listing measurement data (3).
FIG. 8A is a table listing differences between the measurement data (1) and the measurement data (2), and FIG. 8B a table listing differences between the measurement data (1) and the measurement data (3).

DESCRIPTION OF EMBODIMENTS

A method for identifying geometric errors according to the present invention is described below in detail.

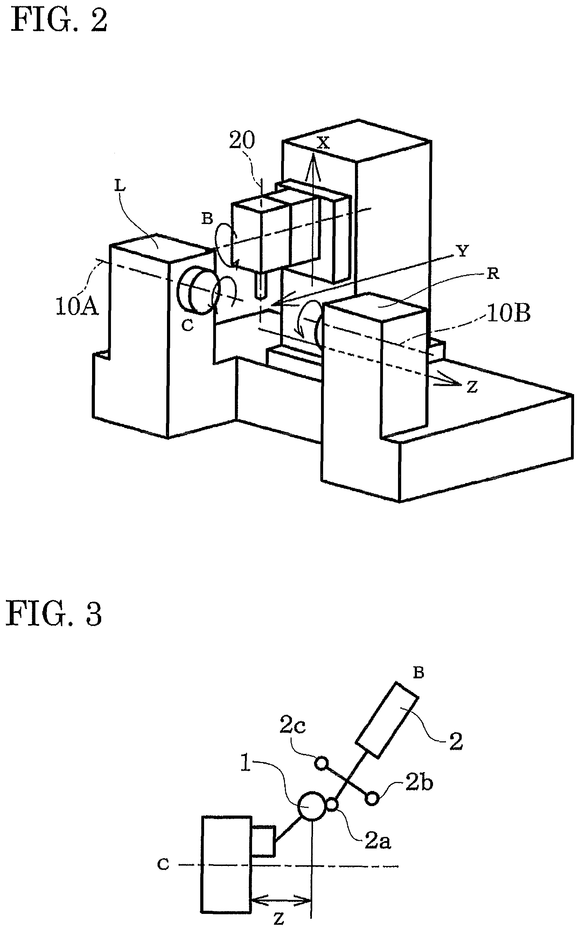

FIGS. 1 and 2 schematically illustrate a model of a machine tool. FIG. 1 illustrates a turning center having one spindle, and FIG. 2 illustrates a turning center having two L and R opposed spindles. In FIGS. 1 and 2, a workpiece is held and rotated by a spindle 10 (10A, 10B) that is C-axis controlled. A tool attached to a tool spindle 20 can make translational motion in X, Y, and Z axes that are orthogonal (intersecting in a broader sense) to each other, and can make rotational motion about the B axis.

As illustrated in FIG. 3, a reference sphere 1 is provided on an end surface (C-axis end surface) on the L side spindle 10, and a touch probe 2 is attached to a B-axis side. In this example, styluses 2a to 2c with different turning radii are attached to the touch probe 2.

When there is no geometric error, the origin of a workpiece-side coordinate system is at the center of the C-axis end surface, and the origin of a tool-side coordinate system is at the intersection between the B axis and the tool spindle 20.

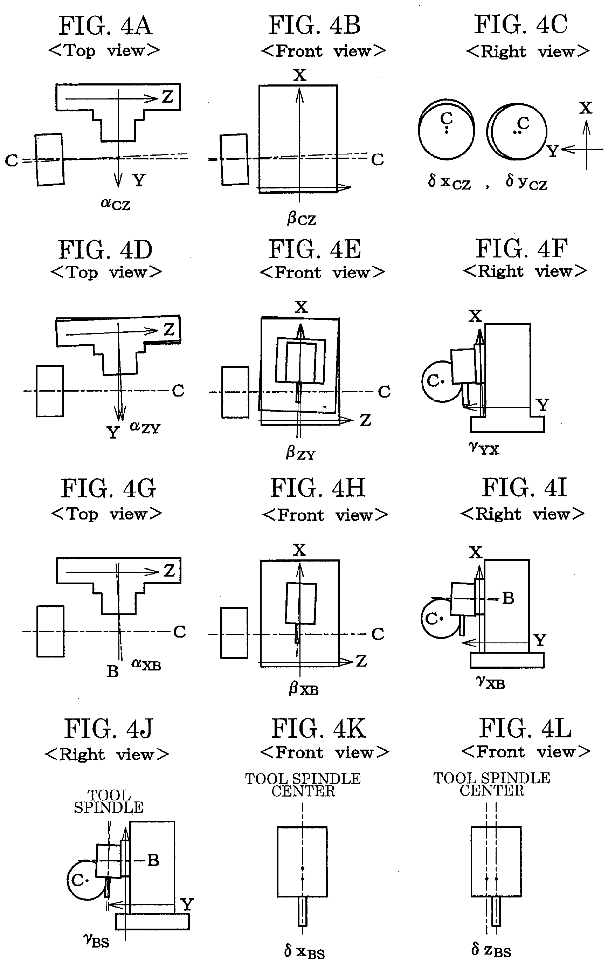

A reference sphere center position measurement value $[X'Y'Z']^T$ [mm] of the reference sphere 1 attached to be on the L side can be expressed by the formula below. In the formulae below, signs of 13 types of geometric errors defined in FIG. 4 and FIG. 5 are used.

$$
\begin{aligned}
&[X'\quad Y'\quad Z']^T \\
&= \begin{bmatrix} \{L_z - L_x(\beta_{ZY} + \beta_{XB}) - \delta z_{BS}\}\sin b + \{L_x + L_z(\beta_{ZY} + \beta_{XB}) - \delta x_{BS}\}\cos b + x_0 \cos c + \delta x_{CZ} + z_0 \beta_{CZ} \\ \{L_z \gamma_{XB} + L_x(\alpha_{ZY} + \alpha_{XB})\}\sin b + \{L_x \gamma_{XB} - L_z(\alpha_{ZY} + \alpha_{XB})\}\cos b + x_0 \sin c - x_0 \gamma_{YX}\cos c + \delta y_{CZ} - z_0 \alpha_{CZ} + L_x \gamma_{BS} \\ -(L_x + L_z \beta_{XB} - \delta x_{BS})\sin b + (L_z - L_x \beta_{XB} - \delta z_{BS})\cos b - x_0(\alpha_{ZY} - \alpha_{CZ})\sin c + x_0(\beta_{ZY} - \beta_{CZ})\cos c + z_0 \end{bmatrix} \cdots(1)
\end{aligned}
$$

, where

$[L_x\ 0\ L_z]^T$ [mm] represents a stylus position in the tool-side coordinate system,
$[x_0\ 0\ z_0]^T$ [mm] represents the reference sphere initial position,
b represents a B-axis angle [°], and
c represents a C-axis angle [°].

<Measurement with four-axis operation>

When the reference sphere center position is measured with the B axis fixed and the C-axis rotated, the reference sphere center position measurement value $[X_c{}'Y_c{}'Z_c{}']^T$ [mm] can be expressed by the following formula based on Formula (1):

$$\begin{bmatrix} X_c{}' \\ Y_c{}' \\ Z_c{}' \end{bmatrix} = \begin{bmatrix} x_0 \cos c + L_x - \delta x_{BS} + \delta x_{CZ} + z_0 \beta_{CZ} \\ x_0 \sin c - x_0 \gamma_{YX} \cos c + L_x \gamma_{XB} + \delta y_{CZ} - z_0 \alpha_{CZ} + L_x \gamma_{BS} \\ -x_0 (\alpha_{ZY} - \alpha_{CZ}) \sin c + x_0 (\beta_{ZY} - \beta_{CZ}) \cos c - L_x \beta_{XB} - \delta z_{BS} + z_0 \end{bmatrix} \cdots (2)$$

, where

b = 0°, and
$L_z$ = 0 mm.

When the reference sphere initial position is changed from $[x_0 \; 0 \; z_0]^T$ to $[x_0+x_1 \; 0 \; z_0+z_1]^T$ in Formula (2), a difference $[\Delta Xc'\Delta Yc'\Delta Zc']^T$ [mm] of the reference sphere center position measurement value can be expressed by the following formula:

$$\begin{bmatrix} \Delta X_c{}' \\ \Delta Y_c{}' \\ \Delta Z_c{}' \end{bmatrix} = \begin{bmatrix} x_1 \cos c + z_1 \beta_{CZ} \\ x_1 \sin c - x_1 \gamma_{YX} \cos c - z_1 \alpha_{CZ} \\ -x_1 (\alpha_{ZY} - \alpha_{CZ}) \sin c + x_1 (\beta_{ZY} - \beta_{CZ}) \cos c + z_1 \end{bmatrix} \cdots (3)$$

When the reference sphere center position is measured with the C axis fixed and the B axis rotated, the reference sphere center position measurement value $[X_b{}'Y_b{}'Z_b{}']^T$ [mm] can be expressed by the following formula based on Formula (1):

$$\begin{bmatrix} X_b{}' \\ Y_b{}' \\ Z_b{}' \end{bmatrix} = \begin{bmatrix} \{L_z - L_x (\beta_{ZY} + \beta_{XB}) - \delta z_{BS}\} \sin b + \{L_x + L_z (\beta_{ZY} + \beta_{XB}) - \delta x_{BS}\} \cos b + x_0 + \delta x_{CZ} + z_0 \beta_{CZ} \\ \{L_z \gamma_{XB} + L_x (\alpha_{ZY} + \alpha_{XB})\} \sin b + \{L_x \gamma_{XB} - L_z (\alpha_{ZY} + \alpha_{XB})\} \cos b - x_0 \gamma_{YX} + \delta y_{CZ} - z_0 \alpha_{CZ} + L_x \gamma_{BS} \\ -(L_x + L_z \beta_{XB} - \delta x_{BS}) \sin b + (L_z - L_x \beta_{XB} - \delta z_{BS}) \cos b + x_0 (\beta_{ZY} - \beta_{CZ}) + z_0 \end{bmatrix} \cdots (4)$$

, where c = 0°.

When the measurement point position in the tool-side coordinate system is changed from $[L_x \; 0 \; 0]^T$ to $[L_x+l_x \; 0 \; l_z]^T$ in Formula (4), a difference $[\Delta X_b{}'\Delta Y_b{}'\Delta Z_b{}']^T$ [mm] of the reference sphere center position measurement value can be expressed by the following formula:

$$\begin{bmatrix} \Delta X_b{}' \\ \Delta Y_b{}' \\ \Delta Z_b{}' \end{bmatrix} = \begin{bmatrix} \{l_z - l_x (\beta_{ZY} + \beta_{XB})\} \sin b + \{l_x + l_z (\beta_{ZY} + \beta_{XB})\} \cos b \\ \{l_z \gamma_{XB} + l_x (\alpha_{ZY} + \alpha_{XB})\} \sin b + \{l_x \gamma_{XB} - l_z (\alpha_{ZY} + \alpha_{XB})\} \cos b + l_x \gamma_{BS} \\ -(l_x + l_z \beta_{XB}) \sin b + (l_z - l_x \beta_{XB}) \cos b \end{bmatrix} \cdots (5)$$

With Formulae (2) to (5), geometric errors are identified through the following procedure (with the reference sphere attached to be on the L side).

1. Measurement data (i) on the reference sphere center position is obtained with the C-axis fixed, while indexing the B-axis angle at an equal interval (first measurement step). In this step, the B axis turns within a range of 0 to -90°.
2. Measurement data (ii) on the reference sphere center position is obtained through an operation that is the same as that in procedure 1, with the measurement point of the touch probe changed to a position with a different turning radius (second measurement step). Data (i)' is obtained as the difference between the data (i) and the data (ii).
3. Measurement data (iii) on the reference sphere center position is obtained with the B axis fixed, while indexing

4

the C-axis angle at an equal interval (third measurement step). In this step, the C axis is rotated by a single rotation.

4. Measurement data (iv) on the reference sphere center position is obtained through an operation that is the same as that in procedure 3, with the Z direction initial position (see FIG. 3) of the reference sphere 1 changed (fourth measurement step). Data (iv)' is obtained as the difference between the data (iii) and the data (iv).

5. Geometric errors $\alpha_{CZ}$, $\beta_{CZ}$ are obtained based on the data (iv)', Formula (3), and the following Formula:

$$\begin{cases} \sum_{i=1}^{n} \sin \theta_i = \sum_{i=1}^{n} \cos \theta_i = 0 \\ \sum_{i=1}^{n} \sin^2 \theta_i = \sum_{i=1}^{n} \cos^2 \theta_i = \frac{n}{2} \end{cases} \qquad \text{where}\,\theta_i = \frac{360°}{n} i$$

(angle for equally dividing the circumference into n)

6. A result of the procedure 5 is substituted in Formula (2), and geometric errors $\alpha_{ZY}$, $\gamma_{YX}$ are obtained based on the data (iii) and the aforementioned formula.

7. Geometric errors $\beta_{ZY}$, $\beta_{XB}$, and $\gamma_{BS}$ are obtained with Formula (5) fit to the data (ii)'.

8. Geometric errors $\delta x_{CZ}$, $\delta y_{CZ}$, $\delta x_{BS}$, $\delta z_{BS}$, $\alpha_{XB}$, and $\gamma_{XB}$ are obtained with a formula, obtained by substituting results of the procedures 5, 6, and 7 in Formula (4), fit to the data (i).

<Measurement with five-axis operation>

The C-axis is rotated by a single rotation, while the B axis turns within a range of 0 to -90°.

More specifically, an operation is performed to satisfy the following formula:

$$c - c_0 = -4b \cdots (6)$$

,

where $c_0$ represents an angle of rotation by the C axis to set a Y coordinate of the sphere initial position of the reference sphere that has been attached to be 0.

Thus, based on Formula (1), the reference sphere center position measurement value $[X_1'Y_1'Z_1']^T$ [mm] can be expressed by the following formula:

$$[X_1' \quad Y_1' \quad Z_1']^T$$
$$= \begin{bmatrix} \{L_z - L_x(\beta_{ZY} + \beta_{XB}) - \delta x_{BS}\}\sin b + \{L_x + L_z(\beta_{ZY} + \beta_{XB}) - \delta x_{BS}\}\cos b + x_0 \cos 4b + \delta x_{CZ} + z_0\beta_{CZ} \\ \{L_z\gamma_{XB} + L_x(\alpha_{ZY} + \alpha_{XB})\}\sin b + \{L_x\gamma_{XB} - L_z(\alpha_{ZY} + \alpha_{XB})\}\cos b - x_0 \sin 4b - x_0\gamma_{YX}\cos 4b + \delta y_{CZ} - z_0\alpha_{CZ} + L_x\gamma_{BS} \\ -(L_x + L_z\beta_{XB} - \delta x_{BS})\sin b + (L_z - L_x\beta_{XB} - \delta z_{BS})\cos b + x_0(\alpha_{ZY} - \alpha_{CZ})\sin 4b + x_0(\beta_{ZY} - \beta_{CZ})\cos 4b + z_0 \end{bmatrix} \cdots (7)$$

, where
$c_0$ represents 0°.

When $[x_0\ 0\ z_0]^T$ is changed to $[x_0+x_1\ 0\ z_0+z_1]^T$ in Formula (7), a difference $[\Delta X_1'\Delta Y_1'\Delta Z_1']^T$ [mm] of the reference sphere center position measurement value can be expressed by the following formula:

$$\begin{bmatrix} \Delta X_1' \\ \Delta Y_1' \\ \Delta Z_1' \end{bmatrix} = \begin{bmatrix} x_1 \cos 4b + z_1\beta_{CZ} \\ -x_1 \sin 4b - x_1\gamma_{YX}\cos 4b - z_1\alpha_{CZ} \\ x_1(\alpha_{ZY} - \alpha_{CZ})\sin 4b + x_1(\beta_{ZY} - \beta_{CZ})\cos 4b + z_1 \end{bmatrix} \cdots (8)$$

When the measurement point position in the tool-side coordinate system is changed from $[L_x\ 0\ 0]^T$ to $[L_x+l_x\ 0\ l_z]T$ in Formula (7), a difference $[\Delta X_2'\Delta Y_2'\Delta Z_2']^T$ [mm] of the reference sphere center position measurement value can be expressed by the following formula:

$$\begin{bmatrix} \Delta X_2' \\ \Delta Y_2' \\ \Delta Z_2' \end{bmatrix} = \begin{bmatrix} \{l_z - l_x(\beta_{ZY} + \beta_{XB})\}\sin b + \{l_x + l_z(\beta_{ZY} + \beta_{XB})\}\cos b \\ \{l_z\gamma_{XB} + l_x(\alpha_{ZY} + \alpha_{XB})\}\sin b + \{l_x\gamma_{XB} - l_z(\alpha_{ZY} + \alpha_{XB})\}\cos b + l_x\gamma_{BS} \\ -(l_x + l_z\beta_{XB})\sin b + (l_z - l_x\beta_{XB})\cos b \end{bmatrix} \cdots (9)$$

Geometric errors are identified with Formulae (7) to (9) through the following procedure (with the reference sphere attached to be on the L side).

1. The measurement data (i) on the reference sphere center position is obtained with the B-axis angle and the C-axis angle indexed at each predetermined interval to satisfy Formula (6) (first simultaneous measurement step).
2. The measurement data (ii) on the reference sphere center position is obtained through an operation that is the same as that in procedure 1, with the measurement point of the touch probe 2 changed to a position with a different turning radius. Data (ii)' is obtained as the difference between the data (i) and the data (ii) (second measurement step).
3. The measurement data (iii) on the reference sphere center position is obtained through an operation that is the same as that in procedure 1 with the Z direction initial position (see FIG. 3) of the reference sphere 1 changed. Data (iii)' is obtained as the difference between the data (i) and the data (iii) (third measurement step).
4. The geometric errors $\alpha_{CZ}$ and $\beta_{CZ}$ are obtained based on the data (iii)' and Formula (8).
5. The geometric errors $\beta_{ZY}$, $\beta_{XB}$, and $\gamma_{BS}$ are obtained with Formula (9) fit to the data (ii)'.
6. The geometric errors $\delta x_{CZ}$, $\delta y_{CZ}$, $\delta x_{BS}$, $\delta z_{BS}$, $\alpha_{ZY}$, $\gamma_{YX}$, $\alpha_{XB}$, and $\gamma_{XB}$ are obtained with a formula, obtained by substituting results of the procedures 4 and 5 in Formula (7), fit to the data (i).

The geometric error identification procedure described above is performed with the reference sphere attached to be on the L side in FIG. 2. It is to be noted that the geometric errors can be identified through the same procedure also when the reference sphere is attached to be on the R side in FIG. 2.

Then, geometric error identification simulation is performed with a simplified CAD model of a turning center.

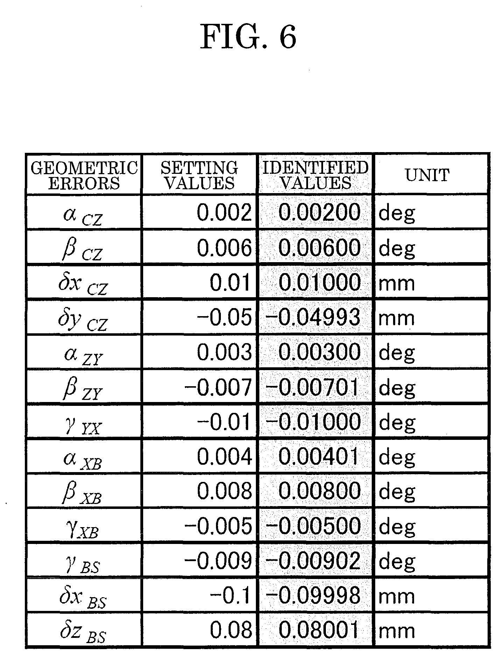

Values of the geometric errors that are setting values as illustrated in the table in FIG. 6 are provided to the simplified model.

Specifically, the slide position coordinates on the X, Y, and Z axes are measured by providing the B-axis and the C-axis angle, with the touch probe measurement point matching the center of the reference sphere.

Measurement is performed with the XYZ coordinates based on the origin at the center of the C-axis end surface on the L side illustrated in FIG. 2.

In this process, the position of the reference sphere 1 is set to be S1;[80, 0, 50], S2;[80, 0, 100], and the position of the touch probe measurement point (coordinates as viewed from the intersection between the B axis and the tool spindle) is set to be P1;[-300, 0, 0], P2;[-280, 0, -20].

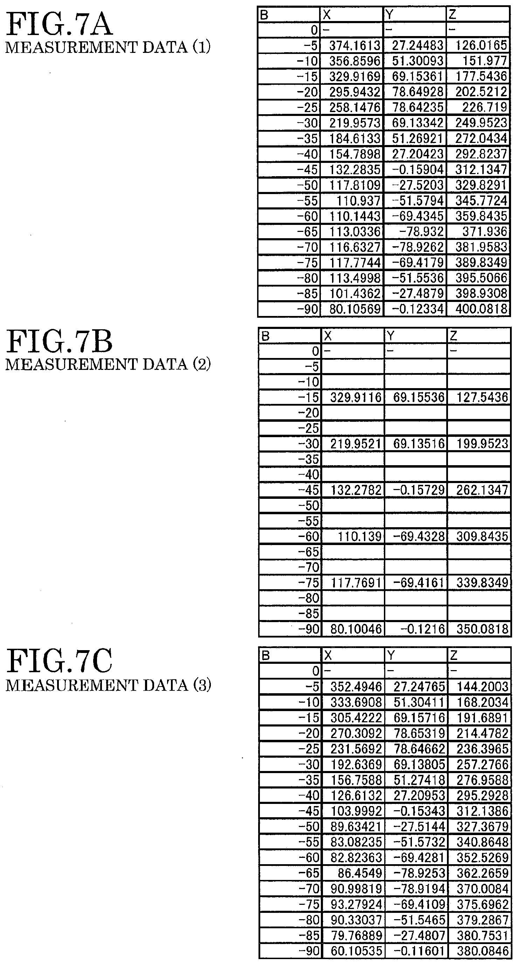

FIG. 7A illustrates measurement data (1) in a case where the B-axis and the C-axis angles are simultaneously indexed with the measurement point PI matching the position S1 of the reference sphere 1.

FIG. 7B illustrates measurement data (2) in a case where the B-axis and the C-axis angles are simultaneously indexed with the measurement point PI matching the position S2 of the reference sphere 1.

FIG. 7C illustrates measurement data (3) in a case where the B-axis and the C-axis angles are simultaneously indexed with the measurement point P2 matching the position S1 of the reference sphere 1.

The C-axis angle is obtained by multiplying the value of the B-axis angle by -4.

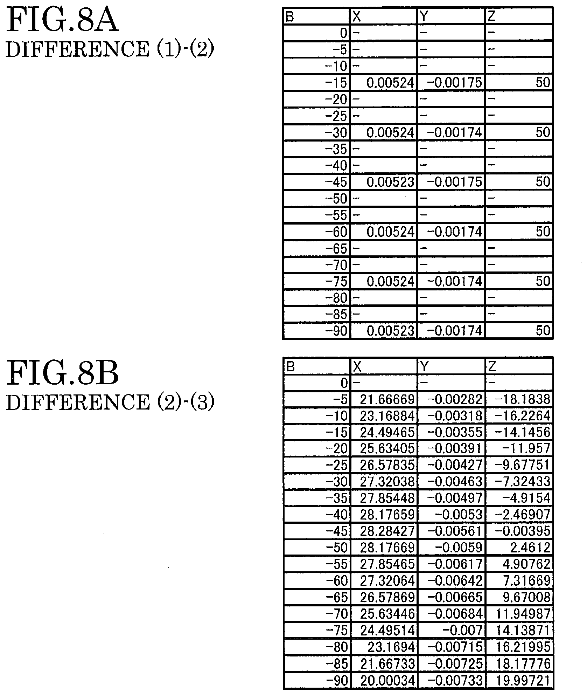

FIG. 8A illustrates differences obtained by subtracting measurement data (2) from measurement data (1). FIG. 8B illustrates differences obtained by subtracting measurement data (3) from measurement data (1).

The values identified based on these values are obtained as the identified values in the table in FIG. 6.

The values indicate that identified errors are small.

Although only some embodiments of the present invention have been described in detail above, those skilled in the art will readily appreciate that many modifications are possible in the embodiments without materially departing from the novel teachings and advantages of this invention as claimed in the appended claims.

**Claims**

1. An error identification method for a five-axis controlled machine tool including three translational axes for translational control in X, Y, and Z axis directions and two rotation axes for rotation control about B and C axes, wherein the X axis is a vertical axis, Z and Y axes are orthogonal in a plane orthogonal to the X axis, and the B axis is a rotary feed axis for rotation about an axis in parallel with the Y axis, and the C axis is a rotary feed axis for rotation about an axis in parallel with the Z axis, the method comprising:

a step of providing a reference sphere to the C axis and attaching a touch probe to the B axis;

a first measurement step of measuring a center position of the reference sphere while indexing an angle of the B axis at an equal interval when the B axis turns within a range of 0 to 90°, with the C axis fixed;

a second measurement step of measuring the center position of the reference sphere as same as in the first measurement step with a turning radius of a measurement point of the touch probe changed;

a third measurement step of measuring the center position of the reference sphere while indexing an angle of the C axis at an equal interval when the C axis turns by a single rotation, with the B axis fixed; and

a fourth measurement step of measuring the center position of the reference sphere as same as in the third measurement step with a Z direction initial position of the reference sphere changed.

2. The error identification method for a machine tool as defined in claim 1, the touch probe including a plurality of styluses different from each other in the turning radius of the measurement point.

3. The error identification method for a machine tool as defined in claim 1, the reference sphere including a plurality of reference spheres different from each other in a Z direction position on the side of the C axis.

4. The error identification method for a five-axis controlled machine tool as defined in claim 1
wherein instead of respectively performing the first to fourth measurement steps, the method comprises:

a first simultaneous measurement step of measuring a center position of the reference sphere by simultaneously performing the first and third measurement steps when the B axis turns within a range of 0 to -90° and the C axis is rotated by a single rotation while the B axis turns;

a second simultaneous measurement step of measuring the center position of the reference sphere as in the first simultaneous measurement step with a turning radius of a measurement point of the touch probe changed; and

a third simultaneous measurement step of measuring the center position of the reference sphere as in the first simultaneous measurement step with a Z direction initial position of the reference sphere changed.

5. The error identification method for a machine tool as defined in claim 4, the touch probe including a plurality of styluses different from each other in the turning radius of the measurement point.

6. The error identification method for a machine tool as defined in claim 4, the reference sphere including a plurality of reference spheres different from each other in a Z direction position on the side of the C axis.

**Patentansprüche**

1. Fehleridentifizierungsverfahren für eine fünfachsige gesteuerte Werkzeugmaschine mit drei Translationsachsen zur Translationssteuerung in X-, Y- und Z-Achsrichtungen und zwei Rotationsachsen zur Rotationssteuerung um B- und C-Achsen, wobei die X-Achse eine Vertikalachse ist, und die Z- und Y-Achsen senkrecht zueinander in einer Orthogonalebene zu der X-Achse sind und die B-Achse eine Drehzuführachse zur Rotation um eine zur Y-Achse parallelen Achse ist und die C-Achse eine Drehzuführachse zur Rotation um eine zur Z-Achse parallele Achse ist, wobei das Verfahren aufweist:

- einen Verfahrensschritt des Vorsehens einer Bezugskugel an der C-Achse und Befestigen eines Tastfühlers an der B-Achse,

- einen ersten Messschritt des Messens einer Mittenposition der Bezugskugel, während einer Unterteilung eines Winkels der B-Achse in gleiche Intervalle, wenn bei fester C-Achse die B-Achse innerhalb eines Bereiches von 0° bis 90° dreht,

- einen zweiten Messschritt des Messens der Mittenposition der Bezugskugel gleich wie in dem ersten Messschritt mit einem veränderten Drehradius des Messpunktes des Tastfühlers,

- einen dritten Messschritt des Messens der Mittenposition der Bezugskugel, während einer Unterteilung eines Winkels der C-Achse in gleiche Intervalle, wenn bei fester B-Achse die C-Achse um eine einzelne Drehung dreht, und

- einen vierten Messschritt des Messens der Mittenposition der Bezugskugel gleich wie in dem dritten Messschritt mit einer geänderten Z-Richtungs-Anfangsposition der Bezugskugel.

2. Fehleridentifizierungsverfahren für eine Werkzeugmaschine nach Anspruch 1, wobei der Tastfühler eine Vielzahl von Tastspitzen aufweist, welche zueinander in dem Drehradius des Messpunktes unterschiedlich zueinander sind.

3. Fehleridentifizierungsverfahren für eine Werkzeugmaschine nach Anspruch 1, wobei die Bezugskugel an der Seite zur C-Achse eine Vielzahl von Bezugskugeln aufweist, welche in einer Z-Richtungsposition zueinander unterschiedlich sind.

4. Fehleridentifizierungsverfahren für eine 5-achsige gesteuerte Werkzeugmaschine nach Anspruch 1,
wobei statt einer entsprechenden Durchführung des ersten bis vierten Messschrittes das Verfahren aufweist:

   - einen ersten gleichzeitigen Messschritt des Messens einer Mittenposition der Bezugskugel durch gleichzeitiges Durchführen des ersten und dritten Messschrittes, wenn die B-Achse innerhalb eines Bereiches von 0° bis -90° dreht und die C-Achse durch eine einzelne Drehung gedreht wird, während die B-Achse dreht,
   - einen zweiten gleichzeitigen Messschritt des Messens der Mittenposition der Bezugskugel wie in dem ersten gleichzeitigen Messschritt mit einem geänderten Drehradius des Messpunktes des Tastfühlers, und
   - einem dritten gleichzeitigen Messschritt des Messens der Mittenposition der Bezugskugel wie in dem ersten gleichzeitigen Messschritt mit einer geänderten Z-Richtungs-Anfangsposition der Bezugskugel.

5. Fehleridentifizierungsverfahren für eine Werkzeugmaschine nach Anspruch 4, wobei der Tastfühler eine Vielzahl von Tastspitzen aufweist, welche zueinander in dem Drehradius des Messpunktes unterschiedlich sind.

6. Fehleridentifizierungsverfahren für eine Werkzeugmaschine nach Anspruch 4, wobei die Bezugskugel an der Seite der C-Achse eine Vielzahl von Bezugskugeln aufweist, welche zueinander unterschiedlich in einer Z-Richtungsposition sind.

**Revendications**

1. Procédé d'identification d'erreur pour une machine-outil commandée à cinq axes comprenant trois axes de translation pour une commande de translation dans les directions des axes X, Y et Z et deux axes de rotation pour une commande de rotation autour des axes B et C, dans lequel l'axe X est un axe vertical, les axes Z et Y sont orthogonaux dans un plan orthogonal à l'axe X, et l'axe B est un axe d'avance en rotation pour une rotation autour d'un axe en parallèle avec l'axe Y, et l'axe C est un axe d'avance en rotation pour une rotation autour d'un axe en parallèle avec l'axe Z, le procédé comprenant :

   une étape de fourniture d'une sphère de référence à l'axe C et de fixation d'une sonde tactile à l'axe B ;
   une première étape de mesure comprenant la mesure d'une position centrale de la sphère de référence tout en indexant un angle de l'axe B à un intervalle égal quand l'axe B tourne dans une plage allant de 0 à 90°, avec l'axe C fixe ;
   une deuxième étape de mesure comprenant la mesure de la position centrale de la sphère de référence comme dans la première étape de mesure avec un rayon de giration d'un point de mesure de la sonde tactile modifié ;
   une troisième étape de mesure comprenant la mesure de la position centrale de la sphère de référence tout en indexant un angle de l'axe C à un intervalle égal quand l'axe C tourne d'une seule rotation, avec l'axe B fixe ; et
   une quatrième étape de mesure comprenant la mesure de la position centrale de la sphère de référence comme dans la troisième étape de mesure avec une position initiale de direction Z de la sphère de référence modifiée.

2. Procédé d'identification d'erreur pour une machine-outil selon la revendication 1, la sonde tactile comprenant une pluralité de stylets différents les uns des autres dans le rayon de giration du point de mesure.

3. Procédé d'identification d'erreur pour une machine-outil selon la revendication 1, la sphère de référence comprenant une pluralité de sphères de référence différentes les unes des autres dans une position de direction Z sur le côté de l'axe C.

4. Procédé d'identification d'erreur pour une machine-outil commandée à cinq axes selon la revendication 1,
dans lequel au lieu de mettre en œuvre respectivement les première à quatrième étapes de mesure, le procédé comprend :

   une première étape de mesure simultanée comprenant la mesure d'une position centrale de la sphère de référence en mettant en œuvre simultanément les première et troisième étapes de mesure quand l'axe B tourne dans une plage allant de 0 à -90° et l'axe C est tourné d'une seule rotation tandis que l'axe B tourne ;
une deuxième étape de mesure simultanée comprenant la mesure de la position centrale de la sphère de référence comme dans la première étape de mesure simultanée avec un rayon de giration d'un point de mesure de la sonde tactile modifié ; et
une troisième étape de mesure simultanée comprenant la mesure de la position centrale de la sphère de référence comme dans la première étape de mesure simultanée avec une position initiale de direction Z de la sphère de référence modifiée.

5. Procédé d'identification d'erreur pour une machine-outil selon la revendication 4, la sonde tactile comprenant une pluralité de stylets différents les uns des autres dans le rayon de giration du point de mesure.

6. Procédé d'identification d'erreur pour une machine-outil selon la revendication 4, la sphère de référence comprenant une pluralité de sphères de référence différentes les unes des autres dans une position de direction Z sur le côté de l'axe C.

# FIG. 1

## FIG. 2

## FIG. 3

# FIG. 4A
## \<Top view\>

$\alpha_{CZ}$

# FIG. 4B
## \<Front view\>

$\beta_{CZ}$

# FIG. 4C
## \<Right view\>

$\delta x_{CZ}$ , $\delta y_{CZ}$

# FIG. 4D
## \<Top view\>

$\alpha_{ZY}$

# FIG. 4E
## \<Front view\>

$\beta_{ZY}$

# FIG. 4F
## \<Right view\>

$\gamma_{YX}$

# FIG. 4G
## \<Top view\>

$\alpha_{XB}$

# FIG. 4H
## \<Front view\>

$\beta_{XB}$

# FIG. 4I
## \<Right view\>

$\gamma_{XB}$

# FIG. 4J
## \<Right view\>

TOOL SPINDLE

$\gamma_{BS}$

# FIG. 4K
## \<Front view\>

TOOL SPINDLE CENTER

$\delta x_{BS}$

# FIG. 4L
## \<Front view\>

TOOL SPINDLE CENTER

$\delta z_{BS}$

# FIG. 5

| | | GEOMETRIC ERRORS OF TURNING CENTER POSITION ERRORS:[mm], ANGLE ERRORS:[rad] |
|---|---|---|
| C-Z AXIS | $\alpha_{CZ}$ | C-Y SQUARENESS ERROR |
| | $\beta_{CZ}$ | C-X SQUARENESS ERROR |
| | $\delta x_{CZ}$ | C-AXIS POSITION ERROR IN X DIRECTION |
| | $\delta y_{CZ}$ | C-AXIS POSITION ERROR IN Y DIRECTION |
| Z-Y AXIS | $\alpha_{ZY}$ | Z-Y SQUARENESS ERROR |
| | $\beta_{ZY}$ | Z-X SQUARENESS ERROR |
| Y-X AXIS | $\gamma_{YX}$ | Y-X SQUARENESS ERROR |
| X-B AXIS | $\alpha_{XB}$ | Z-B SQUARENESS ERROR |
| | $\beta_{XB}$ | B-AXIS ANGLE OFFSET |
| | $\gamma_{XB}$ | X-B SQUARENESS ERROR |
| B-TOOL SPINDLE | $\gamma_{BS}$ | B-TOOL SPINDLE SQUARENESS ERROR |
| | $\delta x_{BS}$ | TOOL SPINDLE POSITION ERROR IN X DIRECTION |
| | $\delta z_{BS}$ | TOOL SPINDLE POSITION ERROR IN Z DIRECTION |

# FIG. 6

| GEOMETRIC ERRORS | SETTING VALUES | IDENTIFIED VALUES | UNIT |
|---|---|---|---|
| $\alpha_{CZ}$ | 0.002 | 0.00200 | deg |
| $\beta_{CZ}$ | 0.006 | 0.00600 | deg |
| $\delta x_{CZ}$ | 0.01 | 0.01000 | mm |
| $\delta y_{CZ}$ | −0.05 | −0.04993 | mm |
| $\alpha_{ZY}$ | 0.003 | 0.00300 | deg |
| $\beta_{ZY}$ | −0.007 | −0.00701 | deg |
| $\gamma_{YX}$ | −0.01 | −0.01000 | deg |
| $\alpha_{XB}$ | 0.004 | 0.00401 | deg |
| $\beta_{XB}$ | 0.008 | 0.00800 | deg |
| $\gamma_{XB}$ | −0.005 | −0.00500 | deg |
| $\gamma_{BS}$ | −0.009 | −0.00902 | deg |
| $\delta x_{BS}$ | −0.1 | −0.09998 | mm |
| $\delta z_{BS}$ | 0.08 | 0.08001 | mm |

# FIG.7A
MEASUREMENT DATA (1)

| B | X | Y | Z |
|---|---|---|---|
| 0 | – | – | – |
| -5 | 374.1613 | 27.24483 | 126.0165 |
| -10 | 356.8596 | 51.30093 | 151.977 |
| -15 | 329.9169 | 69.15361 | 177.5436 |
| -20 | 295.9432 | 78.64928 | 202.5212 |
| -25 | 258.1476 | 78.64235 | 226.719 |
| -30 | 219.9573 | 69.13342 | 249.9523 |
| -35 | 184.6133 | 51.26921 | 272.0434 |
| -40 | 154.7898 | 27.20423 | 292.8237 |
| -45 | 132.2835 | -0.15904 | 312.1347 |
| -50 | 117.8109 | -27.5203 | 329.8291 |
| -55 | 110.937 | -51.5794 | 345.7724 |
| -60 | 110.1443 | -69.4345 | 359.8435 |
| -65 | 113.0336 | -78.932 | 371.936 |
| -70 | 116.6327 | -78.9262 | 381.9583 |
| -75 | 117.7744 | -69.4179 | 389.8349 |
| -80 | 113.4998 | -51.5536 | 395.5066 |
| -85 | 101.4362 | -27.4879 | 398.9308 |
| -90 | 80.10569 | -0.12334 | 400.0818 |

# FIG.7B
MEASUREMENT DATA (2)

| B | X | Y | Z |
|---|---|---|---|
| 0 | – | – | – |
| -5 | | | |
| -10 | | | |
| -15 | 329.9116 | 69.15536 | 127.5436 |
| -20 | | | |
| -25 | | | |
| -30 | 219.9521 | 69.13516 | 199.9523 |
| -35 | | | |
| -40 | | | |
| -45 | 132.2782 | -0.15729 | 262.1347 |
| -50 | | | |
| -55 | | | |
| -60 | 110.139 | -69.4328 | 309.8435 |
| -65 | | | |
| -70 | | | |
| -75 | 117.7691 | -69.4161 | 339.8349 |
| -80 | | | |
| -85 | | | |
| -90 | 80.10046 | -0.1216 | 350.0818 |

# FIG.7C
MEASUREMENT DATA (3)

| B | X | Y | Z |
|---|---|---|---|
| 0 | – | – | – |
| -5 | 352.4946 | 27.24765 | 144.2003 |
| -10 | 333.6908 | 51.30411 | 168.2034 |
| -15 | 305.4222 | 69.15716 | 191.6891 |
| -20 | 270.3092 | 78.65319 | 214.4782 |
| -25 | 231.5692 | 78.64662 | 236.3965 |
| -30 | 192.6369 | 69.13805 | 257.2766 |
| -35 | 156.7588 | 51.27418 | 276.9588 |
| -40 | 126.6132 | 27.20953 | 295.2928 |
| -45 | 103.9992 | -0.15343 | 312.1386 |
| -50 | 89.63421 | -27.5144 | 327.3679 |
| -55 | 83.08235 | -51.5732 | 340.8648 |
| -60 | 82.82363 | -69.4281 | 352.5269 |
| -65 | 86.4549 | -78.9253 | 362.2659 |
| -70 | 90.99819 | -78.9194 | 370.0084 |
| -75 | 93.27924 | -69.4109 | 375.6962 |
| -80 | 90.33037 | -51.5465 | 379.2867 |
| -85 | 79.76889 | -27.4807 | 380.7531 |
| -90 | 60.10535 | -0.11601 | 380.0846 |

## FIG.8A
### DIFFERENCE (1)-(2)

| B | X | Y | Z |
|---|---|---|---|
| 0 | – | – | – |
| –5 | – | – | – |
| –10 | – | – | – |
| –15 | 0.00524 | –0.00175 | 50 |
| –20 | – | – | – |
| –25 | – | – | – |
| –30 | 0.00524 | –0.00174 | 50 |
| –35 | – | – | – |
| –40 | – | – | – |
| –45 | 0.00523 | –0.00175 | 50 |
| –50 | – | – | – |
| –55 | – | – | – |
| –60 | 0.00524 | –0.00174 | 50 |
| –65 | – | – | – |
| –70 | – | – | – |
| –75 | 0.00524 | –0.00174 | 50 |
| –80 | – | – | – |
| –85 | – | – | – |
| –90 | 0.00523 | –0.00174 | 50 |

## FIG.8B
### DIFFERENCE (2)-(3)

| B | X | Y | Z |
|---|---|---|---|
| 0 | – | – | – |
| –5 | 21.66669 | –0.00282 | –18.1838 |
| –10 | 23.16884 | –0.00318 | –16.2264 |
| –15 | 24.49465 | –0.00355 | –14.1456 |
| –20 | 25.63405 | –0.00391 | –11.957 |
| –25 | 26.57835 | –0.00427 | –9.67751 |
| –30 | 27.32038 | –0.00463 | –7.32433 |
| –35 | 27.85448 | –0.00497 | –4.9154 |
| –40 | 28.17659 | –0.0053 | –2.46907 |
| –45 | 28.28427 | –0.00561 | –0.00395 |
| –50 | 28.17669 | –0.0059 | 2.4612 |
| –55 | 27.85465 | –0.00617 | 4.90762 |
| –60 | 27.32064 | –0.00642 | 7.31669 |
| –65 | 26.57869 | –0.00665 | 9.67008 |
| –70 | 25.63446 | –0.00684 | 11.94987 |
| –75 | 24.49514 | –0.007 | 14.13871 |
| –80 | 23.1694 | –0.00715 | 16.21995 |
| –85 | 21.66733 | –0.00725 | 18.17776 |
| –90 | 20.00034 | –0.00733 | 19.99721 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016155185 A
- US 20130253871 A1
- US 20130139660 A1
- US 20150377617 A1
- DE 102007015947 A1
- US 20010045021 A1